## Europäisches Patentamt

## European Patent Office

## Office européen des brevets

(19)

(11) Veröffentlichungsnummer: **0 102 477**
**A2**

(12) # EUROPÄISCHE PATENTANMELDUNG

(21) Anmeldenummer: 83106609.7

(22) Anmeldetag: 06.07.83

(51) Int. Cl.³: **B 01 D 59/18**

(30) Priorität: 23.07.82 DE 3227622

(43) Veröffentlichungstag der Anmeldung:
14.03.84 Patentblatt 84/11

(84) Benannte Vertragsstaaten:
CH DE FR GB IT LI NL SE

(71) Anmelder: NUSTEP Trenndüsen Entwicklungs- und
Patentverwertungsgesellschaft mbH & Co. KG
Bismarckstrasse 54
D-4300 Essen(DE)

(72) Erfinder: Grossstück, Werner
Gustav-Stresemann-Strasse 8
D-7530 Pforzheim(DE)

(72) Erfinder: Schäfer, Rainer, Dr.-Ing.
Goethestrasse 29
D-4322 Sprockhövel 1(DE)

(54) Trennelement für das Trennen gasförmiger Isotope in mindestens zwei Fraktionen und mit mehreren Trennelementen aufgebauter Trennkorb.

(57) Bei einem Trennelement für gasförmige Isotope in zwei Fraktionen bestehend aus mehreren länglichen Trenndüsen-Chips mit einer Reihe von Einströmöffnungen für das Ausgangsgas auf der einen Seite der Chips und einer Reihe von Austrittsöffnungen für die schwere Fraktion auf der anderen Seite des Chips und Austrittsöffnungen für eine leichte Fraktion an den Kanten des Chips und aus zwei die Chips haltenden und mindestens eine Kammer aufweisenden Rohren, die miteinander durch Verbindungsmittel verbunden sind und in ihren Halteflächen mit auf die Eintrittsöffnungen bzw. auf die Austrittsöffnungen ausgerichteten Durchgängen versehen sind, wobei die Reihen der Eintrittsöffnungen und der Austrittsöffnungen in den Chips in Längsrichtung geordnet sind, ist zur Vereinfachung der Montage und des Aufbaus erfindungsgemäß vorgesehen, daß die Chips (2; 35) sich in Längsrichtung der Rohre (1, 3; 30) erstrecken und an ihren Seiten (5, 6) direkt an den ebenen Halteflächen (1a, 3a; 30a) der Rohre anliegen und daß die Verbindungsmittel (4) in einer Reihe etwa mittig die beiden Rohre durchsetzen.

FIG. 1

EP 0 102 477 A2

NUSTEP Trenndüsen-Entwicklungs- und
Patentverwertungsgesellschaft mbH & Co. KG
Bismarckstraße 54

4300 Essen 1

Stichwort: Kompaktfolientrennelement

**Trennelement für das Trennen gasförmiger Isotope in mindestens zwei Fraktionen und mit mehreren Trennelementen aufgebauter Trennkorb**

Die Erfindung betrifft zunächst ein Trennelement für das Trennen gasförmiger Isotope in mindestens zwei Fraktionen der im Oberbegriff des vorstehenden Anspruches 1 genannten Art.

Aus Gmelin, Handbuch der anorganischen Chemie, Uranergänzungsband, Teil A 2, ist ein Trennelement bekannt, bei dem in eine Metallfolie eine große Zahl von Trenndüsenstrukturen für Einfachumlenksysteme (EUS) zusammen mit den Gasführungskanälen für das Ausgangsgas und die schwere Fraktion mit Hilfe der Fotoätztechnik eingebracht wird. Durch Stapeln solcher Folien erhält man sog. Trenndüsen-Chips, die auf beiden Seiten mit Abdeckplatten versehen sind. Das Ausgangsgas wird über Bohrungen in der einen Abdeckplatte zugeführt, während die schwere Fraktion über Bohrungen in der anderen Abdeckplatte entnommen wird. Die leichte Fraktion strömt an den Längskanten des Folienstapels ab. Durch Einfügen solcher länglicher Chips zwischen zwei Halbrohren, in denen das Ausgangsgas zugeführt bzw. die schwere Fraktion abgeführt wird, ergibt sich ein rohrartiges technisches Trennelement. Bei dem bekannten Trennelement sind die Folien zwischen den metallischen Abdeckplatten durch gesonderte Verbindungsmittel in Form von Schrauben gehalten. Die Chips sind zwischen den beiden Halbrohren so eingefügt, daß sie sich quer zur Längsrichtung der Halbrohre erstrecken. Um die Durchgänge sind ringartige Dichtungen aus Weichstoff vorgesehen, die den Randbereich der Trenndüsen-Chips nach außen hin abdichten. Die Halbrohre sind mit randständigen Flanschen versehen, längs derer sie nach Einfügen der Trenndüsen-Chips miteinander verschraubt werden. Durch diese randständige Verbindung der Halbrohre besteht die Gefahr, daß im mittleren Bereich der Dichtungen kein ausreichender Anpressdruck erzielt wird. Darüber hinaus erschweren die Weichstoffdichtungen und der Einsatz gesonderter Verbindungsmittel für die Chips die Fertigung der Trennelemente. Bei Einsatz des Trennelements zum Trennen der in einem $UF_6$-Gemisch vorhandenen Isotopenverbindungen hat sich herausgestellt, daß der für die Dichtungen verwendete Weichstoff angegriffen wird. Diese Bauart macht insbesondere lange Montagezeiten erforderlich.

Weiterhin ist ein Trennelement mit einem Trenndüsen-Chip aus Folien bekannt geworden, bei dem die einzelnen Folien in einem Stapel gegenseitig verschweißt, verlötet oder verklebt werden (DE-AS 20 09 265; BO1d, 53/24). Dort wird jedoch nur ein einziger Folienstapel zwischen zwei Flanschen gehalten.

Schließlich ist aus der DE-OS 30 06 527 (BO1D 59/18) ein Verfahren bekannt geworden, bei dem durch einen lithographischen Prozess unter Einsatz von Röntgenstrahlung, insbesondere Synchrotonstrahlung, auf einer Unterlage mehrere Schichten mit Trenndüsenstrukturen nacheinander derart ausgebildet werden, daß nach Erreichung der für den Einsatzzweck erforderlichen Dicke der

Trenndüsenstruktur ein monolitischer Block vorliegt. In der DE-OS 30 06 527 findet sich kein Hinweis, wie mehrere dieser Trenndüsen-Chips mit Ausgangszuführungsleitungen bzw. Fraktionsabführungsleitungen verbunden werden sollen.

Ausgehend von einem Trennelement gemäß dem Oberbegriff des vorstehenden Anspruches 1 hat sich die vorliegende Erfindung die Aufgabe gestellt, das Trennelement so zu verbessern, daß der Aufbau des Trennelements vereinfacht und die Lebensdauer des Trennelements verlängert wird.

Diese Aufgabe wird dadurch gelöst,

daß die Chips sich in Längsrichtung der Rohre erstrekken und an ihren Seiten direkt an den ebenen Halteflächen der Rohre anliegen und daß die Verbindungsmittel in einer Reihe etwa mittig die beiden Rohre durchsetzen.

Mit dieser Anordnung ist es möglich, auf die gesondert zu fertigenden Weichstoffdichtungen zu verzichten, die gegenüber dem $UF_6$ und dem bei Reinigungsgängen verwendeten Fluor ein kritisches Verhalten zeigen. Eine Demontage des Trennelements nach Reinigung mit Fluor zum Austausch der Dichtungen entfällt.

Vorzugsweise besteht der Chip in an sich bekannter Weise aus einem Stapel von mit Trenndüsenstrukturen versehenen Strukturfolien und ist dieser Strukturfolienstapel evtl. zusammen mit Deckfolien auf beiden Stapelseiten nur durch die Verbindungsmittel der beiden Rohre zusammengehalten.

Die beim Stand der Technik vorhandenen Deckplatten und die gesonderten Chip-Verbindungsmittel kommen in Fortfall;

vielmehr sorgen die Verbindungsmittel der Rohre gleichzeitig für das Zusammenhalten der Folien in dem Stapel.

Die erfindungsgemäße Anordnung kann auch mit Vorteil bei Trennelementen verwendet werden, deren Chips in an sich bekannter Weise aus mehreren Trennstrukturschichten aufgebaut sind, die zu einem monolitischen Block miteinander verbunden sind, wie dies vorstehend beschrieben worden ist.

Bei einem Trenndüsen-Chip aus gesonderten Strukturfolien und bei einem monolitischen Trenndüsen-Chip ist vorzugsweise jeder Chip an mindestens einer Stelle von einem der Verbindungsmittel für die beiden Rohre durchsetzt.

Auf diese Weise kann nach Anordnen der Verbindungsmittel in dem einen Rohr eine Mehrzahl der Chips auf die Anlagefläche dieses Rohres ausgerichtet aufgelegt werden und danach das andere Rohr aufgebracht und die Verbindung aufgebaut werden.

Obwohl sich eine Vielzahl von Verbindungsmitteln eignen, wie z. B. Schrauben, werden als Verbindungsmittel die Rohre durchgreifende Nieten bevorzugt, da eine solche Nietverbindung fertigungstechnisch Vorteile bietet.

Weiterhin ist es zweckmäßig, wenn die Wandung des einzelnen Rohres im Bereich der Anlagefläche verstärkt ausgebildet und fein planbearbeitet ist. In diesem Fall kann die Dichtewirkung an den Anlageflächen noch verbessert werden.

Obwohl die Durchgänge in den Rohren, die der Zufuhr oder Abfuhr von Gasen zu den Chips dienen, auch als Einzelöffnungen ausgebildet sein können, wird aus fertigungstechnischen Gründen bevorzugt, die Durchgänge in den Rohren als sich in Längsrichtung der Rohre erstreckende Schlitze auszubilden.

Als Herstellungsverfahren für die Rohre eignet sich insbesondere das Strangpreßverfahren. Als Querschnittskonfiguration wird bevorzugt, daß der Querschnitt der Rohre den die Haltefläche bestimmenden Wandungsabschnitt und einen zu diesem Wandungsabschnitt parallelen Wandungsabschnitt aufweist, die durch abgerundete Verbindungsabschnitte miteinander verbunden sind.

Um die Rohre zu versteifen und - soweit erforderlich - eine Aufteilung des Rohrinneren in getrennte Kammern zu erzielen, ist es zweckmäßig, daß die beiden Rohre vorzugsweise mit mindestens einem sich in Längsrichtung erstreckenden Innensteg versehen sind, der die Rohre in mindestens zwei Kammern unterteilt.

Bei einem Einfachumlenksystem (EUS), wie es in der den Ausgangspunkt der Erfindung darstellenden Literatur stelle beschrieben ist, ist eine Aufteilung der Rohre in mehrere Kammern nicht erforderlich. Bei Verwendung einer Trenndüsenstruktur, bei der zusätzlich zur schweren Fraktion und zur leichten Fraktion eine mittlere Fraktion abgetrennt wird, ist es zweckmäßig, auf der die Austrittsöffnungen für die schwere Fraktion aufweisenden Seite des einzelnen Chips zusätzlich Austrittsöffnungen für eine mittlere Fraktion vorzusehen und das an dieser Seite anliegende Rohr mit mindestens zwei sich in Längsrichtung erstreckenden Stegen zu versehen, die das Rohr in zwei außen liegende Kammern für eine schwere Fraktion und eine mittig liegende Kammer für eine mittlere Fraktion unterteilen.

Auch bei dieser Konfiguration dienen die Stege zusätzlich der Versteifung des Rohres gegenüber dem von den Verbindungsmitteln aufgebrachten Belastungen.

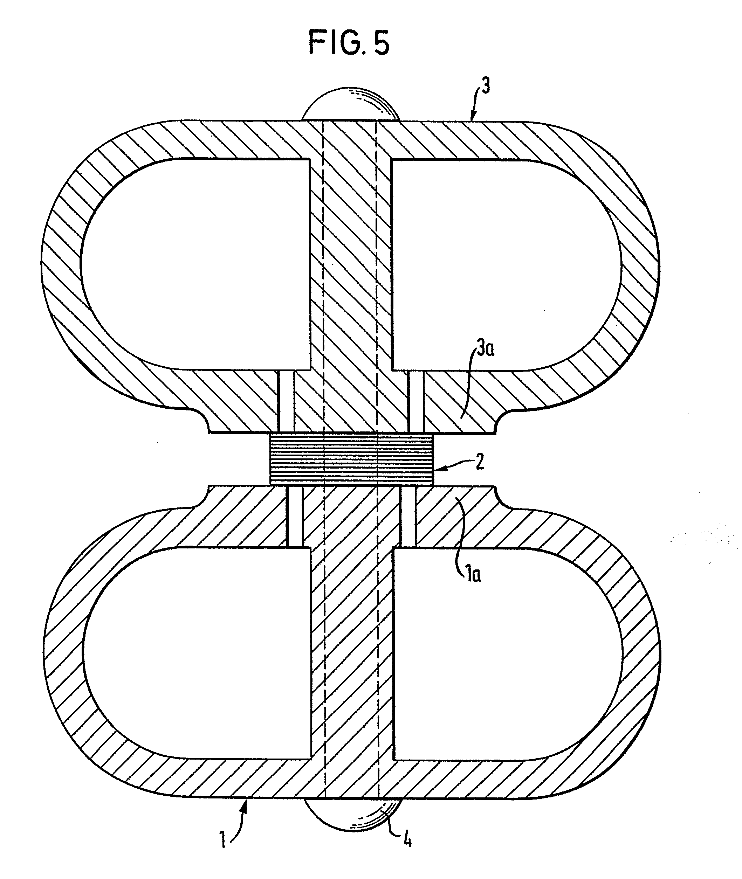

Die Erfindung richtet sich auch auf einen Trennkorb gemäß dem Oberbegriff des vorstehenden Anspruches 10. Ein solcher Trennkorb ist aus S. Villani, Uranium Enrichment, Springer-Verlag, Berlin, Heidelberg, New York (1979), Seiten 257 - 259, insbesondere Figuren 5.13 und 5.15 bekannt. Bei dem bekannten Trennkorb, der in der in Figur 5.3 gezeigten Weise in eine Trennstufe integriert ist, erstreckt sich zwischen jedem Kopf- und Fußflansch jeweils ein 10-Kammertrennrohr mit in Rohrlängsrichtung auf der Rohroberfläche verlaufenden Trenn schlitzen, die von mechanisch bearbeiteten Profilen aufgebaut sind.

Bei einem Trennkorb der eingangs genannten Art ist erfindungsgemäß vorgesehen, daß zwischen jedem Flanschpaar mehrere Trennelemente nach einem der Ansprüche 1 bis 10 angeordnet sind.

Bei einem Doppelumlenksystem (DUS) ist zusätzlich vorgesehen, daß mit Abstand von dem einen Flansch zwischen den beiden Flanschen ein dritter Flansch angeordnet ist, daß beide Rohre sich durch den dritten Flansch gasdicht hindurcherstrecken und das eine Ende des Abführungsrohres in den Zwischenraum zwischen den einen Flansch und dem dritten Flansch teilverschlossen hineinragt.

Dadurch, daß sich die länglichen Chips in Längsrichtung der mit ihnen verbundenen Rohre erstrecken, kann gegenüber der bekannten Anordnung eine Verringerung des Volumenbedarfs bei vorgegebener Trennschlitzlänge erzielt werden, da sich bei zylindrischer Anordnung der mehreren Trennelemente zwischen den beiden Flanschen zu einer Baugruppe die Mittelebenen der Trennelemente im wesentlichen radial und/oder tangential bezüglich der Zylinderkonfiguration erstrecken. Eine dichte Packung der Trennelemente in dem Trennkorb ist dadurch sichergestellt.

Die Erfindung soll nun anhand der beigefügten Figuren näher erläutert werden. Es zeigt:

Figur 1    einen Schnitt durch ein erfindungsgemäßes Trennelement für Einfachumlenkung,

Figur 2    eine teilperspektivische Darstellung des Trennelements gemäß Figur 1,

Figur 3    einen Teilschnitt durch einen Trennkorb und eine der darin angeordneten Trennbaugruppen mit Trennelementen nach Figur 1,

Figur 4    einen Teilquerschnitt durch eine Trennbaugruppe zur Erläuterung verschiedener Anordnungsmöglichkeiten der Trennelemente in einer Baugruppe,

Figur 5    ein Trennelement vergleichbar Figur 1 mit in dem Anlagebereich verstärkter Wandung,

Figur 6    einen Querschnitt durch ein Trennelement für Doppelumlenkung (DUS-Trennelement),

Figur 7    eine perspektivische Darstellung vergleichbar Figur 2 für das DUS-Trennelement ähnlich Figur 6,

8

Figur 8 einen Teillängsschnitt vergleichbar Figur 3 für DUS-Trennbaugruppen nach Fig. 6 oder 7.

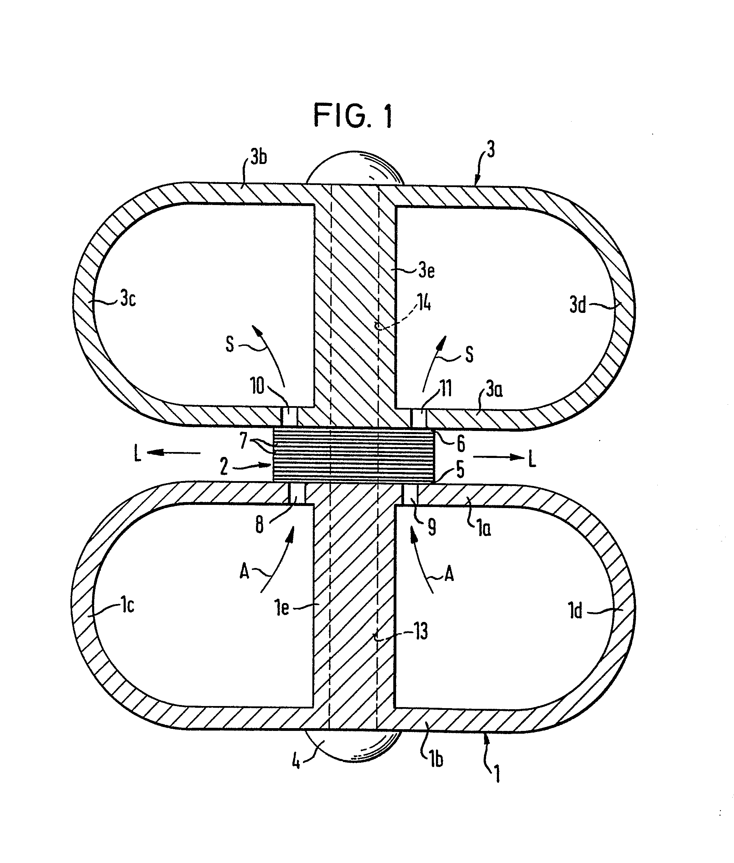

Das in der Figur 1 gezeigte Trennelement besteht aus einem Zuführungsrohr 1 für das Ausgangsgas A, einem Trenndüsen-Chip 2, einem Abführungsrohr 3 für die schwere Fraktion S des Ausgangsgases und aus beiden Rohren durchsetzenden und die Rohre mit dem Trenndüsen-Chip zusammenhaltenden Nieten 4.

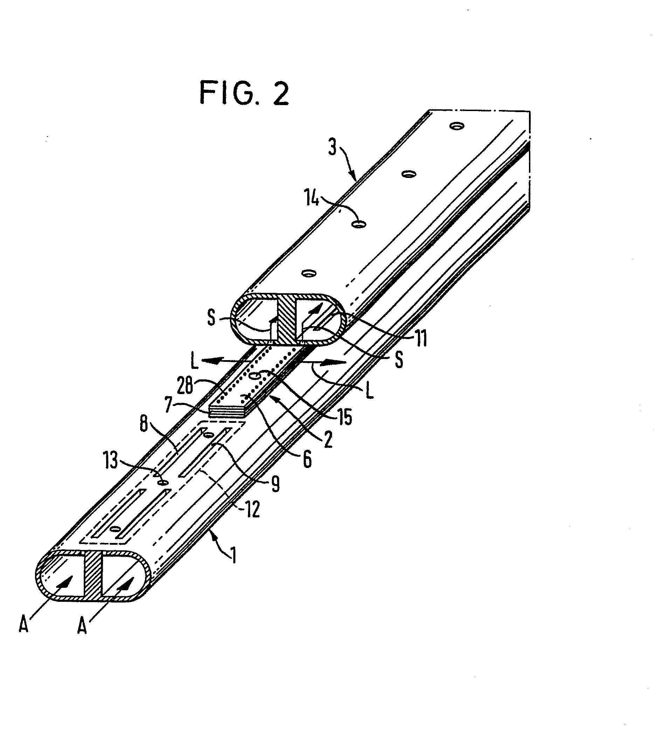

Bei der gezeigten Ausführungsform besteht der Trenndüsen-Chip aus zwei Deckfolien 5 und 6 und mehreren Strukturfolien 7. In den Strukturfolien 7 sind im Bereich der Kanten nicht dargestellte einfachumlenkende Trenndüsenstrukturen ausgebildet, wie sie z. B. in der linken Abbildung der Figur 2-52 der Literaturstelle "Gmelin, Handbuch der anorganischen Chemie" dargestellt sind. Da die vorliegende Erfindung nicht auf besondere Trenndüsenstrukturen, sondern auf die Verbindung der Trenndüsen-Chips mit den Rohren gerichtet ist, werden besondere Trenndüsenstrukturen in der vorliegenden Anmeldung nicht beschrieben. Dies gilt auch für Doppelumlenksysteme, wie sie dem Prinzip nach in Figur 2-48 der gerade zitierten Literaturstelle dargestellt sind. In den Deckfolien sind keine Trenndüsenstrukturen ausgebildet, sondern nur die entsprechenden Zuführungsöffnungen zu den sog. "Blasen" der einzelnen Trenndüsenanordnungen.

Wie aus der Figur 1 ersichtlich ist, besteht das Trennrohr 1 aus einem Anlagewandungsabschnitt 1 a, einem diesen gegenüberliegenden parallelen Wandabschnitt 1 b und zwei diese beiden Abschnitte miteinander verbindende abgerundete Wandabschnitte 1 c und 1 d. Der Wandungsabschnitt 1 b ist mit dem Wandungsabschnitt 1 a durch einen in der Mitte liegenden Steg 1 e verbunden.

9

Im Bereich der Deckfolie 5, in der Öffnungen für das Ausgangsgas ausgebildet sind, ist der Wandungsabschnitt 1 a mit Durchgängen 8 und 9 versehen, durch die das Ausgangsgas A in den Trenndüsen-Chip 2 eintreten kann.

Die Deckfolie 6 auf der anderen Seite des Trenndüsen-Chips ist mit Auslässen für die schwere Fraktion S versehen und in dem Anlagewandungsabschnitt 3 a des Rohrs 3 sind Durchgänge 10 und 11 vorgesehen, durch die die schwere Fraktion S in das Innere des Rohres 3 eintreten kann. Wie aus der Figur 2 ersichtlich ist, sind die Durchgänge 8,9,10 und 11 sich in Längsrichtung der Rohre erstreckende Schlitze und benötigt ein Chip die Auflagefläche 12 auf einem Rohr.

Die Nieten 4 erstrecken sich durch in den Stegen 1 e bzw. 3 e und den zugeordneten Wandabschnitten ausgebildete Bohrungen 13 bzw. 14.

Da bei einem EUS-Trennelement eine Aufteilung des Innenraums der Rohre 1 und 3 in mehrere Kammern nicht erforderlich ist, könnte auf die Stege 1 e und 3 e verzichtet werden, wenn die Rohrwandungen insgesamt so dimensioniert ist, daß sie den erforderlichen Dichtdruck, der von den Nieten 4 aufgebracht wird, aushalten können.

Wie aus der Figur 2 ersichtlich ist, erstrecken sich die Trenndüsen-Chips 2 in Längsrichtung der Rohre.

Bei der gezeigten Ausführungsform überdeckt ein Trenndüsen-Chip jeweils zwei Durchlässe 8,9 bzw. 10,11 und wird selbst in drei Bohrungen 15 von den Nieten durchsetzt. Beim Zusammenbau des Trennelements werden die Nieten z. B. durch die Bohrungen 13 im unteren Rohr 1 hindurchgeführt, die Folienstapel der Trenndüsen-Chips 2 aufgefädelt, das Rohr 3 aufgelegt und danach die Nietung durchgeführt.

Wie aus den Figuren 1 und 2 ersichtlich ist, ist die Breite der Anlagefläche der Rohre 1 und 3 größer als die Breite der Anlagefläche der einzelnen Trenndüsen-Chips 2. Auf diese Weise ist sicher gewährleistet, daß der Dichte- bzw. Anpreßdruck auf beiden Seiten des Trenndüsen-Chips für die gewünschte Dichtung ausreichend ist.

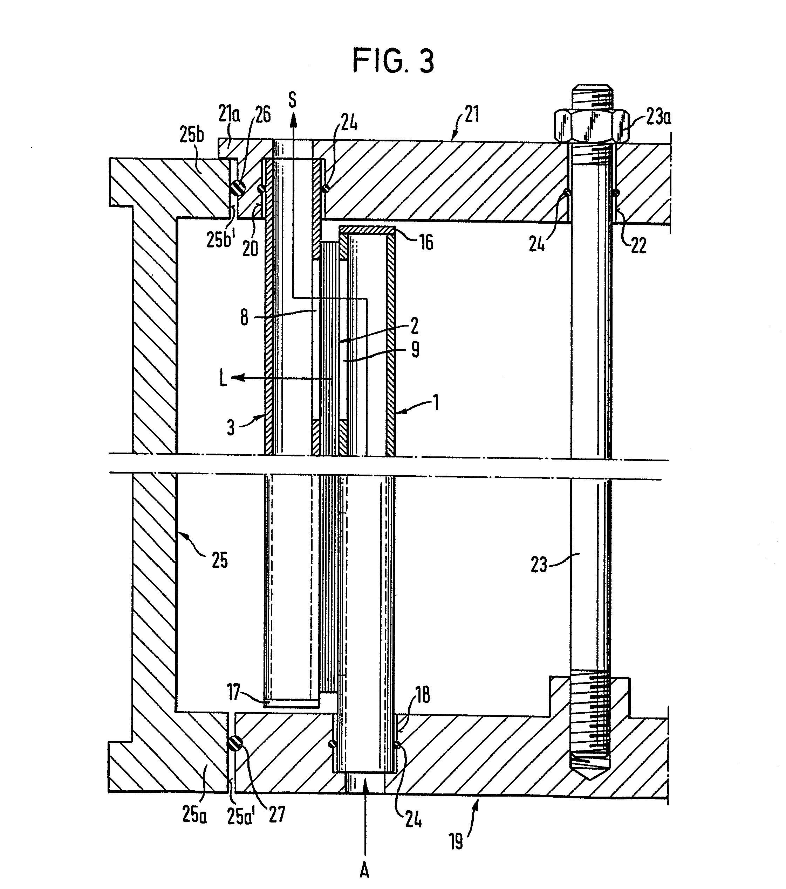

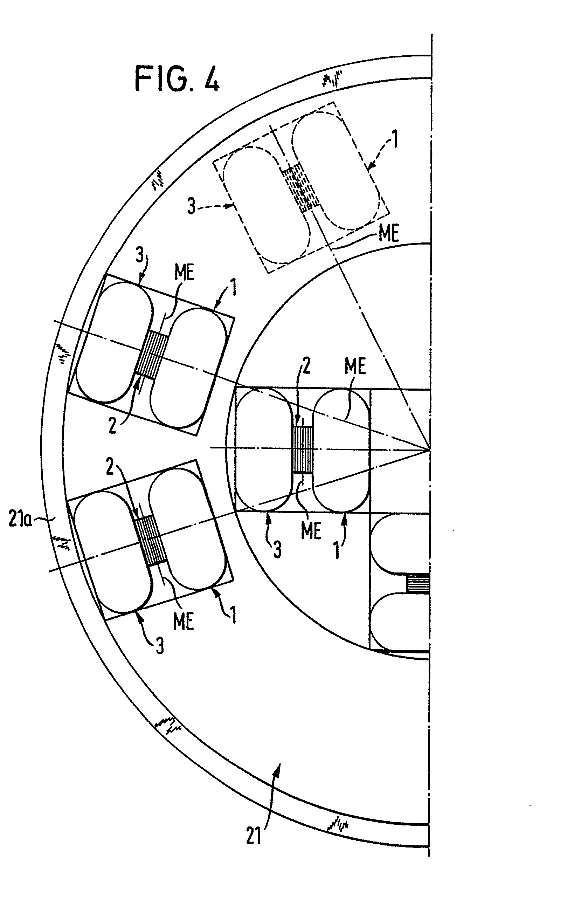

Anhand der Figuren 3 und 4 soll nun der Aufbau einer Trennelementbaugruppe beschrieben werden. Wie aus der Figur 3 ersichtlich ist, ist das Zuführungsrohr 1 an seinem Ende durch einen Deckel 16 verschlossen, während das dem verschlossenen Ende des Rohres 1 benachbarte Ende des Rohres 3 das geschlossene Ende des Rohres 1 überragt und offen ist. Das Rohr 3 ist an seinem anderen Ende durch einen Deckel 17 verschlossen und wird an diesem Ende von dem offenen Ende des Rohres 1 überragt. Das vorstehende Ende des Rohres 1 greift in eine gestufte Axialbohrung 18 eines Flansches 19 (Fußflansch) ein, während das offene Ende des Rohres 3 in eine gestufte Axialbohrung 20 eines Flansches 21 (Kopfflansch) eingreift, so daß beim Anziehen eines in den Flansch 19 eingreifenden und sich durch eine Bohrung 22 im Flansch 21 erstreckenden Zugankers 23 durch Drehen einer Mutter 23a das Trennelement sicher zwichen den beiden Flanschen gehalten ist. In den Bohrungen 18, 20 und 22 sind jeweils Gasdichtungsringe 24 angeordnet.

Wie aus Figur 4 ersichtlich ist, lassen sich mehrere Trennelemente nach verschiedenen Anordnungsmöglichkeiten zwischen den beiden Flanschen 19 und 21 anordnen. Hierbei werden die Anordnungen bevorzugt, bei denen sich die Mittelebenen ME der einzelnen Trennelemente parallel zu den Mittelpunktstrahlen des Zugankers (gestrichelt) oder senkrecht (ausgezogen) zu diesen erstrecken. Gemischte Anordnungen sich auch denkbar.

Wie aus der Figur 3 ersichtlich ist, arbeiten der Fußflansch 19 und der Kopfflansch 21 mit dem Boden 25a bzw. dem Deckel 25b eines Trennkorbs 25 in einer Weise zusammen, wie sie aus der Veröffentlichung S. Villani bekannt ist, auf die hier erneut Bezug genommen wird. Die Stufe 21a im Kopfflansch 21 verhindert beim Beschicken des Korbes durch die Öffnung 25b' im Deckel 25b ein Durchfallen der Trennbaugruppe in das Innere des Korbes hinein. Die Anordnung der Trennbaugruppen im Boden bzw. Deckel des Korbs kann die in der Figur 5-15 der Literaturstelle Villani gezeigte Anordnung aufweisen. Zum Aufbau eines gasdichten Eingriffes zwischen den Flanschen 19 und 21 der Trennelementbaugruppe und den Aufnahmeöffnungen 25a' und 25b' des Korbes 25 sind Dichtungsringe 27 und 26 vorgesehen.

Auch in der Figur 3 sind Ausgangsgas A, leichte Fraktion L und schwere Fraktion S sinnbildlich durch Pfeile dargestellt.

Die in der Figur 5 gezeigte Ausführungsform für ein Einfachumlenksystem unterscheidet sich von der Ausführungsform gemäß Figur 1 im wesentlichen dadurch, daß die Wandbereiche 1a bzw. 3a verdickt ausgebildet sind und einer besonderen Bearbeitung der Auflageflächen unterzogen worden sind, z.B. geläppt worden sind.

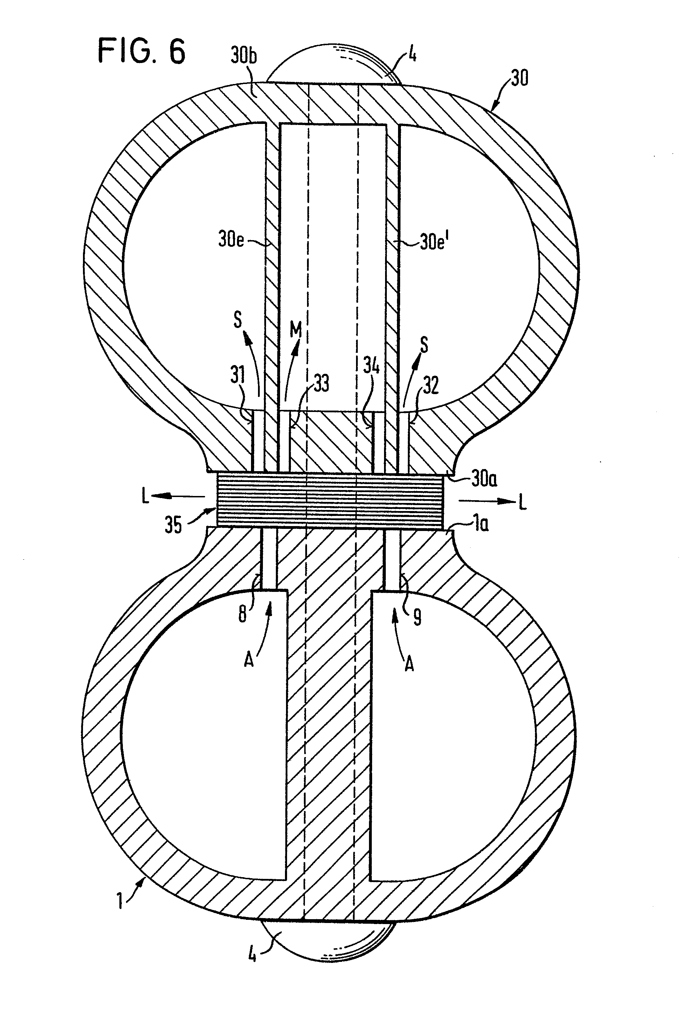

Die Trennelemente gemäß Figuren 6, 7 und 8 sind für eine Doppelumlenkung ausgelegt (DUS). Für vergleichbare Elemente sind dieselben Bezugszeichen wie in der Figur 1 verwendet. Anstelle des Abführungsrohres 3 tritt nunmehr ein Abführungsrohr 30, das durch zwei Stege 30 e und 30e' in zwei außen liegende Kammern für die schwere Fraktion S und eine mittige Kammer für eine Fraktion M unterteilt ist. Die schwere Fraktion S tritt über in dem Wandungsabschnitt 30a vorgesehene schlitzartige Durchgänge 31 und 32 in die Kammern S ein. Zwischen den Durchgängen 31 und 32 liegen zwei Durchgänge 33 und 34, die von den randständigen DUS-Trenndüsenstrukturen die mittlere Fraktion in die zwischen den Kammern 30 e und 30 e' ausgebildete Kammer einleiten. Die leichte Fraktion L tritt wieder über die Kantenbereiche des mit einer entsprechenden Trenndüsenstruktur versehenen Folienstapel-Trenndüsen-Chips 35 aus.

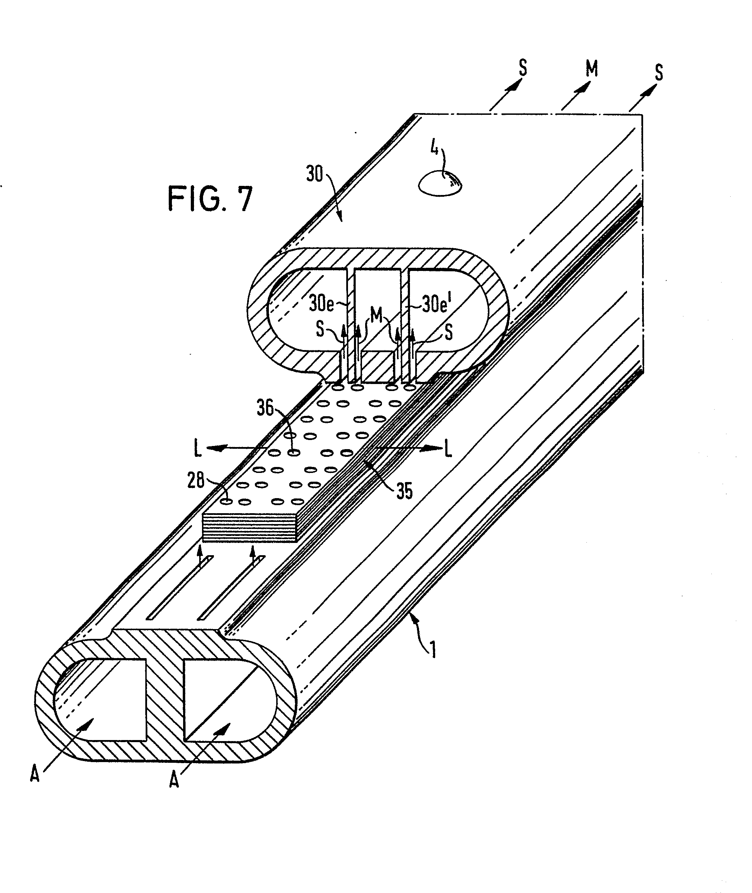

Ein Vergleich der Figur 2 mit der Figur 7 zeigt, daß in der Deckfolie 6 der Trenndüsen-Chips 2 jeweils nur eine Reihe von Austrittsöffnungen 28 für die schwere Fraktion vorgesehen ist, die die schwere Fraktion aus den randständigen Trenndüsenstrukturen nach oben abführt, während in der entsprechenden Deckfolie des Trenndüsen-Chips 35 bei der Figur 7 zusätzlich entsprechende Öffnungen 36 für die mittlere Fraktion M vorgesehen sind.

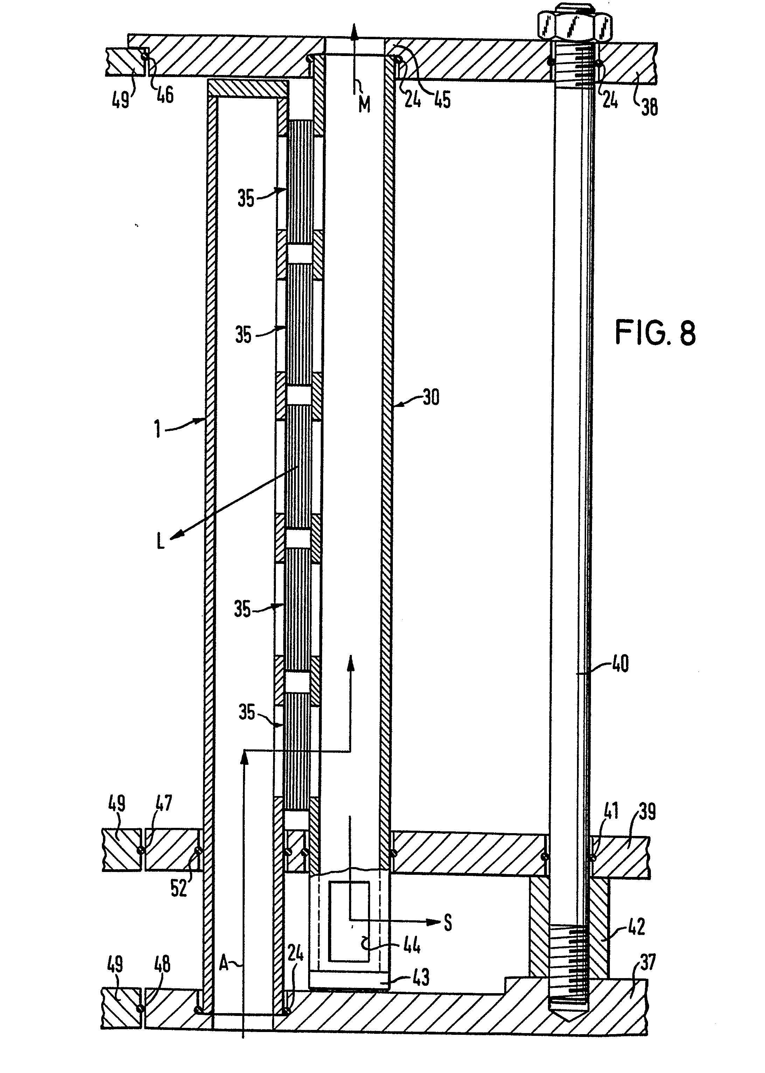

Die Figur 8 zeigt schematisch wie die Trennbaugruppe aussehen könnte, bei der Trennelemente gemäß den Figuren 6 und 7 zum Einsatz kommen. Bei der in der Figur 8 gezeigten Ausführungsform ist zwischen einem unteren Flansch 37 und einem oberen Flansch 38, die den Flanschen 19 und 21 aus Figur 3 entsprechen, ein dritter mittlerer Flansch 39 angeordnet, durch den ein in den Flansch 37 eingreifende Zuganker 40 mittels einer Dichtung 41 hindurchgeführt ist. Zwischen Flansch 37 und Flansch 39 ist eine Distanzbuchse 42 angeordnet, die über den Zuganker geführt ist.

Das bei der in der Figur 8 gezeigten Ausführungsform außen liegende Ausgangsgaszuführungsrohr 1 stützt sich in einer Stufenbohrung des Flansches 37 ab und durchsetzt den mittleren Flansch 39 unter Zwischenschaltung eines Dichtrings 52.

Das Abführungsrohr 30 ist an seinen beiden Endbereichen teilverschlossen. Bei der gezeigten Ausführungsform ist das zwischen die Flansche 39 und 37 ragende Ende mit einer Deckplatte 43 verschlossen und in den Kammern für die schwere Fraktion sind im Bereich des Endes seitliche Öffnungen 44 vorgesehen, die einen Austritt der schweren Fraktion in den Zwischenraum zwischen den beiden Flanschen 39 und 37 ermöglichen. Anstelle der seitlichen Öffnungen ist es auch möglich, daß die Deckplatte nur den der mittleren Kammer zugeordneten Zwischenraum an der Endfläche abdeckt.

Das in eine Stufenbohrung des oberen Flansches 38 eingreifende Ende des Abführungsrohres 30 ist mittels einer Abdeckung 45 über den Kammern der schweren Fraktion verschlossen, so daß die mittlere Fraktion M in den Raum oberhalb des Flansches 38 eintreten kann und dort in geeigneter Weise gesammelt und abgeführt wird. Ein in der Figur 8 nur angedeuteter, dem Trennkorb 25 vergleichbarer Trennkorb 49 für DUS-Trennung ist über Dichtungsringe 46, 47 und 48 gegenüber den Flanschen abgedichtet.

Auch bei diesen Trennelementen für DUS-Trennung lassen sich die verschiedensten Anordnungsmöglichkeiten in der Baugruppe optimieren.

14

Sowohl das mit einem Steg versehene Rohr, vgl. Rohre 1 und 3, als auch das mit zwei Stegen versehene Rohr 30 können im Stranggußverfahren oder Strangpreßverfahren hergestellt werden. Zur Verbesserung des Dichteingriffs zwischen dem Trenndüsen-Chip und den zugeordneten Halteflächen können die Halteflächen der Rohre nach Fertigstellung der Rohre fein bearbeitet werden.

1

NUSTEP Trenndüsen Entwicklungs- und
Patentverwertungsgesellschaft mbH & Co. KG
Bismarckstraße 54

4300 Essen 1

Stichwort: Kompaktfolientrennelement

Trennelement für das Trennen gasförmiger Isotope in
mindestens zwei Fraktionen und mit mehreren Trennelementen aufgebauter Trennkorb

P a t e n t a n s p r ü c h e

1. Trennelement für das Trennen gasförmiger Isotope
   in mindestens zwei Fraktionen

   bestehend aus mehreren länglichen Trenndüsen-Chips
   mit mindestens einer Reihe von Einströmöffnungen
   für das Ausgangsgas auf der einen Seite der Chips
   und mindestens einer Reihe von Austrittsöffnungen
   für die schwere Fraktion auf der anderen Seite des
   Chips und Austrittsöffnungen für eine leichte Fraktion an den Kanten des Chips und aus zwei die Chips
   zwischen sich an ebenen Halteflächen haltenden und
   mindestens eine Kammer aufweisenden Rohren, die miteinander durch in Reihe geordnete Verbindungsmittel
   verbunden sind und in ihren Halteflächen mit auf
   die Eintrittsöffnungen für das Ausgangsgas bzw. mit
   auf die Austrittsöffnungen für die schwere Fraktion
   ausgerichteten Durchgängen versehen sind,

   wobei die Reihen der Eintrittsöffnungen und der Austrittsoffnungen in den Chips in Längsrichtung geordnet sind, dadurch gekennzeichnet,

daß die Chips (2; 35) sich in Längsrichtung der Rohre (1, 3; 30) erstrecken und an ihren Seiten (5, 6) direkt an den ebenen Halteflächen (1a, 3a; 30a) der Rohre anliegen und

daß die Verbindungsmittel (4) in einer Reihe etwa mittig die beiden Rohre durchsetzen.

2. Trennelement nach dem Anspruch 1, dadurch gekennzeichnet, daß der Chip (2) in an sich bekannter Weise aus einem Stapel von mit Trenndüsenstrukturen versehener Strukturfolien (7) besteht und daß diese Strukturfolien evtl. zusammen mit Deckfolien (5, 6) auf beiden Stapelseiten nur durch die Verbindungsmittel (4) der beiden Rohre in einem Stapel zusammengehalten sind.

3. Trennelement nach Anspruch 1,

dadurch gekennzeichnet,

daß die Chips in an sich bekannter Weise aus mehreren Trennsturkturschichten aufgebaut sind, die zu einem monolitischen Block miteinander verbunden sind.

4. Trennelement nach Anspruch 2 oder 3, dadurch gekennzeichnet,

daß jeder Chip (2) an mindestens einer Stelle (15) von einem der Verbindungsmittel (4) für die beiden Rohre (1, 3; 30) durchsetzt ist.

5. Trennelement nach einem der Ansprüche 1 bis 4,

   dadurch gekennzeichnet,

   daß die Verbindungsmittel die Rohre durchgreifende
   Nieten (4) sind.

6. Trennelement nach einem der Ansprüche 1 bis 5,

   dadurch gekennzeichnet,

   daß die Wandung des einzelnen Rohres im Bereich der
   Anlagefläche (1a, 3a; 30a) verstärkt ausgebildet
   und fein planbearbeitet ist.

7. Trennelement nach einem der Ansprüche 1 bis 6,

   dadurch gekennzeichnet,

   daß die Durchgänge (8, 9, 10, 11; 31, 32, 33, 34)
   in den Rohren sich in Längsrichtung der Rohre erstreckende Schlitze sind.

8. Trennelement nach einem der Ansprüche 1 bis 7,

   dadurch gekennzeichnet,

   daß der Querschnitt der Rohre den die Haltefläche
   bestimmenden Wandungsabschnitt (1a, 3a; 30a) und
   einen zu diesem Wandungsabschnitt parallelem Wandungsabschnitt (1b, 3b; 30b) aufweist, die durch
   abgerundete Verbindungsabschnitte (1c, 1d, 3c, 3d)
   miteinander verbunden sind.

9. Trennelement nach einem der Ansprüche 1 bis 8,

   dadurch gekennzeichnet, daß die beiden Rohre (1, 3) mit mindestens einem sich in Längsrichtung erstreckenden Innensteg (1e; 3e) versehen sind, der die Rohre in mindestens zwei Kammern unterteilt.

10. Trennelement nach einem der Ansprüche 1 bis 9,

dadurch gekennzeichnet,

daß auf der die Austrittsöffnungen (28) für die schwere Fraktion (S) aufweisenden Seite des einzelnen Chips (35) zusätzlich Austrittsöffnungen (36) für eine mittlere Fraktion (M) vorgesehen sind,

und daß das an dieser Seite anliegende Rohr (30) mit mindestens zwei sich in Längsrichtung erstrekkenden Stegen (30e, 30e') versehen ist, die das Rohr in zwei außen liegende Kammern für eine schwere Fraktion (S) und eine mittig liegende Kammer für eine mittlere Fraktion (M) unterteilen.

11. Trennkorb mit Boden, Deckel und einem zwischen ihnen angeordneten Mantel, bei dem im Inneren Kammern aufweisende Trennelemente mittels Kopf- und Fußflanschen in Öffnungen des Bodens bzw. Deckels eingreifen und bei dem jedes Trennelement an einem Ende bezüglich mindestens einer Kammer verschlossen ist und der nicht von den Trennelementen eingenommene Korbraum der Sammlung der leichten Fraktion dient,

dadurch gekennzeichnet, daß zwischen jedem Flanschpaar (17, 21; 37, 38) mehrere Trennelemente nach einem der Ansprüche 1 bis 10 angeordnet sind.

12. Trennkorb nach Anspruch 11,

dadurch gekennzeichnet,

daß mit Abstand von dem einen Flansch (37) ein dritter Flansch (39) zwischen den beiden Flanschen (37, 38) angeordnet ist, daß beide Rohre (1; 30) sich durch den dritten Flansch (39) gasdicht hindurcherstrecken und das eine Ende des Abführungsrohres (30) in den Zwischenraum (42) zwischen dem einen Flansch (37) und dem dritten Flansch (39) teilverschlossen hineinragt.

13. Trennkorb nach Anspruch 11 oder 12,

dadurch gekennzeichnet,

daß sich bei zylindrischer Anordnung der mehreren Trennelemente (1, 2, 3; 1, 35, 30) zwischen den beiden Flanschen (21, 19) zu einer Baugruppe die Mittelebenen (ME) der Trennelemente im wesentlichen radial und/oder tangential bezüglich der Zylinderkonfiguration erstrecken.

# FIG. 1

0102477

# FIG. 2

0102477

## FIG. 3

FIG. 4

## FIG. 5

FIG. 6

FIG. 7

FIG. 8